(19) **Europäisches Patentamt**

**European Patent Office**

**Office européen des brevets**

(11) **EP 1 055 999 A2**

(12) **EUROPEAN PATENT APPLICATION**

(43) Date of publication:
29.11.2000 Bulletin 2000/48

(51) Int. Cl.7: **G06F 9/38**

(21) Application number: **00110911.5**

(22) Date of filing: **24.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.05.1999 JP 14360699**
**18.05.2000 JP 2000146218**

(71) Applicant:
**KABUSHIKI KAISHA TOSHIBA**
**Kawasaki-shi, Kanagawa-ken 210-8572 (JP)**

(72) Inventor: **Ohmori, Kenji**
**Kawasaki-shi, Kanagawa-ken (JP)**

(74) Representative: **HOFFMANN - EITLE**
**Patent- und Rechtsanwälte**
**Arabellastrasse 4**
**81925 München (DE)**

(54) **Processor system with address coprocessor**

(57) A processor system includes: a main processor part(1) including a decoder(7) for decoding an instruction, a register part(8) for storing data therein and for outputting data stored at an address included in the decoded instruction, a first memory(12) for storing data therein, and an operation part(10) for making an operation on the basis of the decoded instruction using data outputted from the register part and for storing the operated result in the register part or the first memory; and a coprocessor part(20) including a control register(21) for storing therein a value of a control signal, an address generating part(23,24,27), a memory part(25,26,28) provided so as to correspond to the address generating part, and a main controller(22) for feeding a command signal to the address generating part on the basis of the value of the control signal stored in the control register, to cause the address generating part to generate an address, for causing the memory part to output data stored in the generated data, and for feeding the outputted data to the operation part of the main processor part to cause the operation part to make an operation. Thereby, the proposed processor system can carry out a high speed processing and wherein the whole occupied area is smaller.

FIG.1

**Description**

BACKGROUND OF THE INVENTION

Field of The Invention

The present invention relates generally to a processor system having a reduced instruction set computer (RISC) part and a coprocessor part.

Description of Related Art

In general, if a RISC is intended to carry out a simple loop processing, such as a convolution of speech processing, a arithmetic and logic unit (ALU) of the RISC must also be used for carrying out the address generation for a memory and the determination of a loop, so that it takes a lot of time to carry out the above described processing. In order to solve this problem, a processor system including a RISC part and a digital signal processor (DSP) part is conventionally considered.

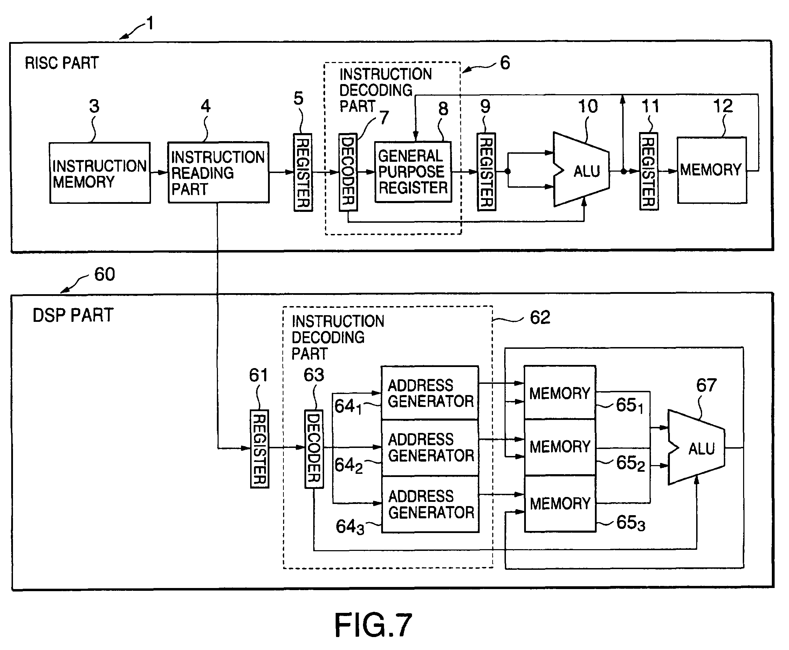

The construction of this conventional processor system is shown in FIG. 7. This conventional processor system comprises a RISC part 1 and a DSP part 60. The RISC part 1 and the DSP part 60 are formed in a semiconductor substrate.

The RISC part 1 comprises an instruction memory 3, an instruction reading part 4, a register 5, an instruction decoding part 6, a register 9, an ALU 10, a register 11 and a memory 12. The instruction decoding part 6 has a decoder 7 and a general purpose register 8.

In addition, the DSP part 60 has a register 61, an instruction decoding part 62, memories $65_1$, $65_2$ and $65_3$, and an ALU 67. The instruction decoding part 62 has a decoder 63, and address generators $64_1$, $64_2$ and $64_3$. Furthermore, the memory $65_i$ (i = 1, • • •, 3) is provided so as to correspond to the address generator $64_i$.

Instructions stored in the instruction memory 3 of the RISC part 1 are read by the instruction reading part 4. Then, the read instructions are fed to the register 5 if the instructions are to be processed by the RISC part 1, and to the register 61 if the instructions are to be processed by the DSP part 60.

The instructions fed to the register 5 are decoded by the decoder 7. The address part of the decoded instructions is fed to the general purpose register 8. Then, data stored at an address of the general purpose register 8 corresponding to an address in the address part are derived to be fed to the register 9.

In addition, a part other than the address part of the decoded instructions, e.g., an operation code, is fed from the decoder 7 to the ALU 10, and data fed to the register 9 are used for carrying out an arithmetic operation or a logical operation. The operated results are transmitted to the general purpose register 8 after being stored in the memory 12 via the register 11, or transmitted directly to the general purpose register 8, and then, stored at a predetermined address of the general purpose register 8.

On the other hand, the instructions fed to the register 61 of the DSP part 60 are decoded by the decoder 63. Then, on the basis of the decoded instructions, addresses are generated from two of the three address generators $64_1$, $64_2$ and $64_3$, and data are outputted from the corresponding memories. Using these data, an operation according to the decoded instructions fed from the decoder 63 is carried out by the ALU 67. Then, the operated results are stored in at least one of the memories $65_1$, $65_2$ and $65_3$.

Thus, in the conventional processor system, the DSP part 60 carries out the address generation for the memories by means of the address generators $64_1$, $64_2$ and $64_3$. Therefore, it is not required to carry out operations in the ALU, so that it is possible to carry out a high speed processing in comparison with a processor system which has no DSP part and which has only a RISC part.

However, in this conventional processor system, each of the RISC part 1 and the DSP part 60 has an ALU, so that there is a problem in that the whole area of a chip is large. In addition, there is a problem in that the program control between the RISC part 1 and the DSP part 60, and the exchange of data stored in the memories are complicated.

SUMMARY OF THE INVENTION

It is therefore an object of the present invention to eliminate the aforementioned problems and to provide a processor system which is capable of carrying out a high speed processing and wherein the whole occupied area is smaller.

In order to accomplish the aforementioned and other objects, according to one aspect of the present invention, a processor system comprises: a main processor part including a decoder for decoding an incorporated instruction, a register part for storing data therein and for outputting data stored at an address included in the decoded instruction, a first memory for storing data therein, and an operation part for making an operation on the basis of the decoded instruction using data outputted from the register part and for storing the operated result in the register part or the first memory; and a coprocessor part including a control register for storing therein a value of a control signal fed from the register part in accordance with the decoded instruction, an address generating part for generating an address, a memory part provided so as to correspond to the address generating part, and a main controller for feeding a command signal to the address generating part on the basis of the value of the control signal stored in the control register, to cause the address generating part to generate an address, for causing the memory part to output data stored in the generated data, and for feeding the outputted data to the operation part of the main processor part to cause the operation part to make an operation.

Preferably, the operation part of the main processor part has a plurality of operational elements, which are connected in series by the main controller of the coprocessor part.

The main processor part may be a RISC part, and the operation of the main controller may be started on the basis of a start signal fed from the decoder.

The address generating part may have first and second address generators, and the memory parts may have second and third memories which correspond to the first and second address generators, respectively.

The command signal may include a SET signal, an incremental signal and an addition-subtraction signal, and each of the first and second address generators may comprise an address register for holding the current address, and an address operational element for operating the next address signal from the address, which is held in the address register, and the value of the incremental signal, in accordance with the values of the SET signal and addition-subtraction signal.

The address operational element may output the incremental signal as the next address signal when the value of the SET signal is "1", and the sum of or difference between the current address and the incremental signal in accordance with the value of the addition-subtraction signal when the value of the SET signal is "0".

The main controller may comprise: a register, a counter for adding 1 to a value, which is held in the register, in response to a timing signal and for causing the register to hold the added value; a comparator for comparing a control signal DATA LENGTH, which is held in the control register and which indicates the length of input data, with the value, which is held in the register, in response to the timing signal; and a state transition circuit for changing its transition on the basis of the compared result of the comparator and the value of the next address signal, which is outputted from the second address generator, to output the SET signal, incremental signal and addition-subtraction signal to the first and second address generators, and to feed a control signal to the operation part of the main processor part.

The state transition circuit may have: a reset state; a start state, in which a start signal is received to set initial addresses of the first and second address generators; a calculation state, in which after the initial addresses are set, the control signal is fed to the operation part and the addresses of the first and second address generators are sequentially set to cause the operation part to make a calculation, which is repeated until the next address signal from the second address generator is equal to a predetermine value; and a completion check state, in which after the calculation state is completed, it is checked whether the calculation is completed on the basis of the compared result of the comparator, and the completion check state returns to the start state when the calculation is not completes and to the reset state when the calculation is completed.

The operation part may comprise a multiply and accumulate operational element.

The coprocessor part may further comprise a third address generator for generating an address in response to a command signal from the main controller, and a fourth memory for storing the operated result, which is outputted from the operation part, at an address outputted from the third address generator.

The processor system may further comprise a DMA control unit for exchanging data between the memory of the main processor part and the memory part of the coprocessor part.

According to another aspect of the present invention, a processor system comprises: a main processor part including a decoder for decoding an incorporated instruction, and an operation part for making an operation using inputted data on the basis of the decoded instruction; and a coprocessor part including a main controller for feeding data to the operation part of the main processor part on the basis of a control signal, which is fed in accordance with the decoded instruction, and for causing the operation part to make an operation.

## BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:

FIG. 1 is a block diagram of the first preferred embodiment of a processor system according to the present invention;

FIG. 2 is a block diagram of the second preferred embodiment of a processor system according to the present invention;

FIG. 3 is a block diagram of an address generator of a processor system according to the present invention;

FIG. 4 is a block diagram of a main controller of a processor system according to the present invention;

FIG. 5 is a schematic diagram showing the storage of data for an convolution operation;

FIG. 6 is a schematic diagram showing the storage of data for an operation of deriving a correlation function;

FIG. 7 is a block diagram of a conventional processor system;

FIG. 8 is a block diagram of an ALU of a conventional processor system; and

FIG. 9 is a block diagram of another preferred embodiment of a processor system according to the present invention.

## DESCRIPTION OF THE PREFERRED EMBODIMENTS

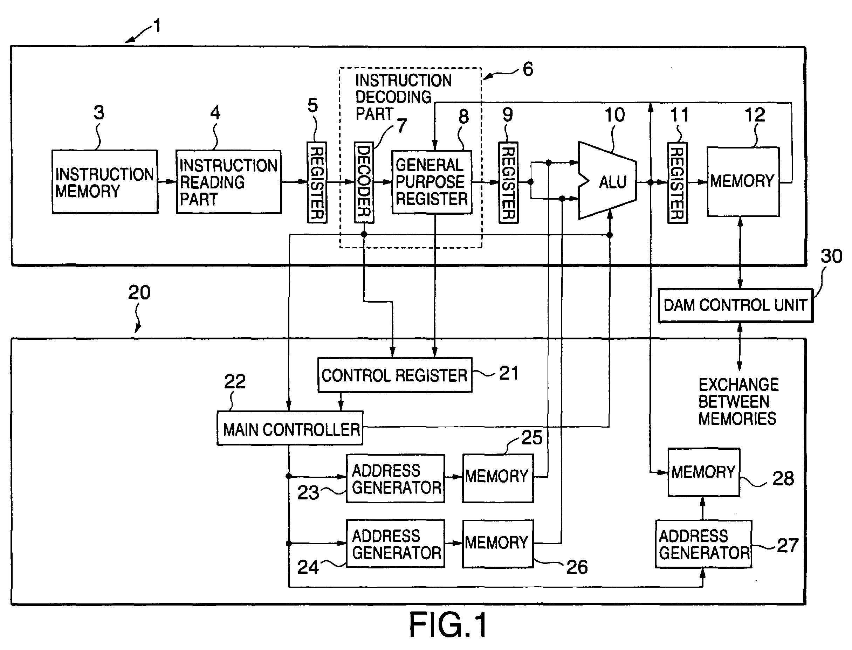

FIG. 1 shows the first preferred embodiment of a processor system according to the present invention. The processor system in this preferred embodiment comprises a RISC part 1, a coprocessor part 20 and a direct memory access (DMA) control circuit 30. The RISC part 1, the coprocessor part 20, and the direct memory access (DMA) control circuit 30 are formed in a semiconductor substrate.

The RISC part 1 comprises an instruction memory 3, an instruction reading part 4, a register 5, an instruction decoding part 6, a register 9, an ALU 10, a register 11 and a memory 12. The instruction decoding part 6 comprises a decoder 7 and a general purpose register 8.

The coprocessor part 20 comprises a control register 21, a main controller 22, address generators 23, 24, memories 25, 26, an address generator 27 and a memory 28.

Instructions stored in the instruction memory 3 of the RISC part 1 are read by the instruction reading part 4 to be fed to the decoder 7 via the register 5. The instructions fed to the decoder 7 are decoded by the decoder 7. Then, if the decoded instructions are to be processed by the RISC part 1, the address part of the decoded instructions is fed to the general purpose register 8.

When the address part of the decoded instruction is fed to the general purpose register 8, data stored at the address of the general purpose register 8 corresponding to the address in the address part are derived to be fed to the register 9.

In addition, a part other than the address part of the decoded instructions, e.g., an operation code, is fed from the decoder 7 to the ALU 10, and data fed to the register 9 are used for carrying out an arithmetic operation or a logical operation. The operated results are transmitted to the general purpose register 8 after being stored in the memory 12 via the register 11, or transmitted directly to the general purpose register 8, and then, stored at a predetermined address of the general purpose register 8.

On the other hand, if the decoded instructions are to be processed by the coprocessor 20, a set signal is fed from the decoder 7 to the control register 21 of the coprocessor 20, and various control values are fed from the general purpose register 8 to the control register 21 to be set therein. After the various control values are set in the control register 21, a start signal is fed from the decoder 7 to the main controller 22. Then, on the basis of the control values which have been set in the control register 21, the main controller 22 feeds command signals to the address generators 23, 24 and 27 to cause the address generators 23, 24 and 27 to generate addresses. Then, the address generators 23 and 24 generate addresses, respectively, and data stored at these addresses are read out from the memories 25 and 26, respectively, to be fed to the ALU 10. At this time, the main controller 22 also feeds a command signal to the ALU 10 to cause the ALU 10 to make an operation on the basis of the data which have been read out from the memories 25 and 26. Then, the operated results are stored at the address of the memory 28, which is generated by the address generator 27 on the basis of the command signal fed from the main controller 22.

Between the memories 25, 26, 28 and the memory 12 of the RISC part 1, data exchange is carried out by the DMA control unit 30.

In this preferred embodiment, since the addresses of the memories in the coprocessor part 20 are generated by the address generators, if simple repeated instructions are processed by the coprocessor 20, it is possible to carry out a high speed processing. In addition, since the operation is made by the ALU 10 of the RISC part 1, it is possible to obtain an operation precision equal to a precision obtained by the RISC part 1. Moreover, since the RISC part 1 and the coprocessor 20 share the ALU 10, it is possible to decrease the whole occupied area.

In addition, the coprocessor part 20 can carry out the processing of instructions, which do not use the ALU 10, in parallel to another processing in the RISC part 1.

Moreover, the processor system in this preferred embodiment is simpler than conventional processor systems since the data transfer between the memory 12 of the RISC part 1 and the memories 25, 26 and 28 of the coprocessor 20 is carried out via the DMA control unit.

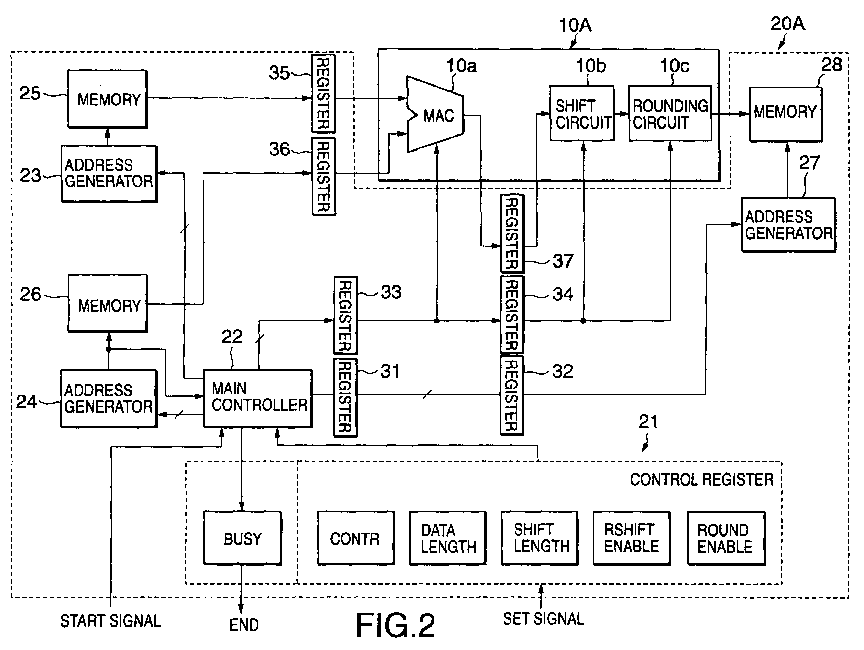

FIG. 2 shows the second preferred embodiment of a processor system according to the present invention. In the processor system in this second preferred embodiment, the ALU 10 of the RISC part of the processor system in the first preferred embodiment is replaced with an operation part 10A, and the coprocessor part 20 is replaced with a coprocessor 20A. For example, the processor system in this preferred embodiment is used for carrying out a convolution correlation processing for speech processing. Furthermore, in FIG. 2, only the operation part 10A is shown in the RISC part 1, and other elements are omitted.

The operation part 10A has a multiply and accumulate operational element(MAC) 10a, a shift circuit 10b and a rounding circuit 10c.

The coprocessor part 20A includes registers 31, 32, 33, 34, 35, 36 and 37 in addition to the elements of the coprocessor part 20 in the first preferred embodiment. The registers 31 and 32 are provided between a main controller 22 and an address generator 27, and the registers 33 and 34 are provided between the main controller 22 and the shift circuit 10b. The register 35 is provided between a memory 25 and the MAC 10a, the register 36 is provided between a memory 26 and the MAC 10a, and the register 37 is provided between the MAC 10a and the shift circuit 10b.

A control register 21 is designed to store therein five input control signals ROUND ENABLE, RSHIFT ENABLE, SHIFT LENGTH, DATA LENGTH and CONTR, and one output control signal BUSY. The control signal CONTR is used for selecting a correlation function operation processing and a convolution operation processing, the control signal DATA LENGTH is used for setting the length of input data, and the control signal SHIFT LENGTH is used for setting the length of a shift after a multiply and accumulate operation. In addition, the control signal RSHIFT ENABLE is used for shifting to the right, and the control signal ROUND ENABLE is used for setting whether a rounding processing is carried out at the end of the operation processing. Moreover, the control signal BUSY is used for indicating whether the coprocessor part 20A is being executed. Furthermore, the five input control signals are fed from a general purpose register 8 to a control register 21, and a set signal is fed from a decoder 7 to the control register 21.

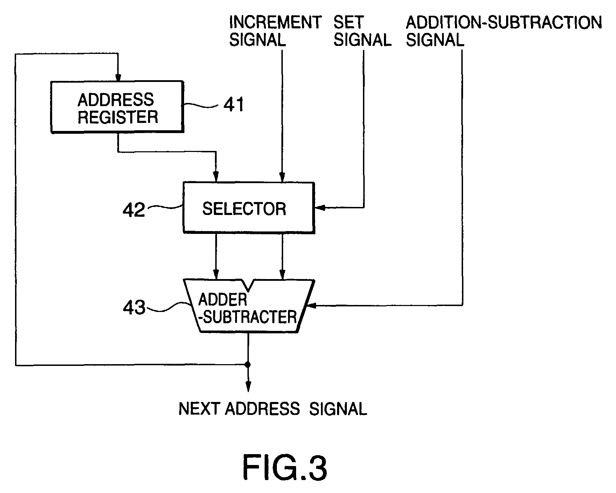

FIG. 3 shows the construction of each of address generators 23, 24 and 27 for use in the processor system in this preferred embodiment. That is, each of the address generators comprises an address register 41, a selector 42 and an adder-subtracter 43, and generates the next address signal on the basis of an incremental signal, a set signal and an addition-subtraction signal, which are fed from the main controller 22. In the address register 41, the current addresses are stored.

The operation of the address generator will be described below.

When the value of the SET signal is "1", the incremental signal is selected by the selector 42 to be fed to the adder-subtracter 43, and outputted directly from the adder-subtracter 43 to serve as the next address signal. On the other hand, when the value of the SET signal is "0", the current address stored in the address register 41, and the incremental signal are selected by the selector 42 to be fed to the adder-subtracter 43. At this time, if the value of the addition-subtraction signal is "0", the values of the current address and incremental signal are added, and the added results are outputted from the adder-subtracter 43 as the next address signal. On the other hand, if the value of the addition-subtraction signal is "1", the difference between the current address and the incremental signal is operated by the adder-subtracter 43, and the operated results are outputted from the adder-subtracter 43 as the next address signal. In response to the next address signal, the address register 41 updates the address.

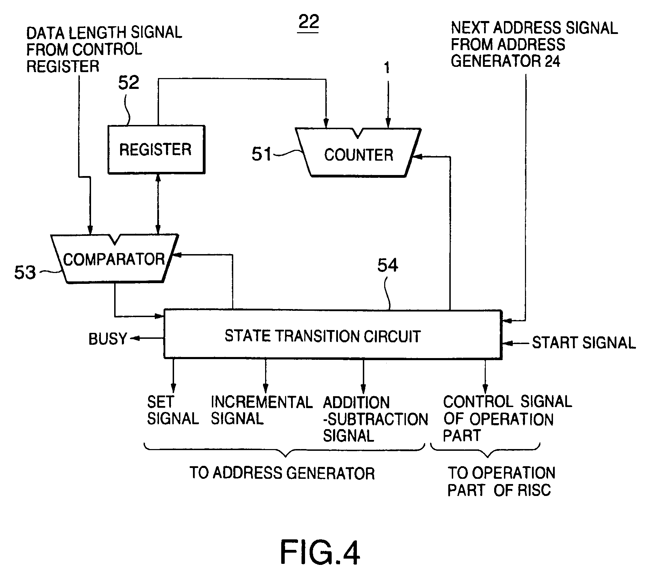

FIG. 4 shows the construction of the main controller 22 for use in the processor system in this preferred embodiment. That is, the main controller 22 comprises a counter 51, a register 52, a comparator 53 and a state transition circuit 54.

The operation of the main controller 22 shown in FIG. 4 will be described below.

First, when a start signal is fed to the state transition circuit 54 from, e.g., the decoder 7 of the RISC part 1 shown in FIG. 1, a control signal value stored in the control register 21 is incorporated into the state transition circuit 54, so that the state of the state transition circuit 54 is changed from a reset state to a start state. At this time, the state transition circuit 54 outputs a BUSY signal having a value of "1". Then, in order to set the initial addresses of the memories 25 and 26, a SET signal having a value of "1" and an incremental signal serving as the initial address of each of the memories 25 and 26 are fed from the state transition circuit 54 to each of the address generators 23 and 24, and the next address serving as the initial address is outputted from each of the address generators 23 and 24. Furthermore, the SET signal and incremental signal used for setting the initial address of the memory 28 are fed to the address generator 27 via the registers 31 and 32, in order to generate an address at a desired timing.

When the initial addresses are thus set in the address generators 23 and 24, the state of the state transition circuit 54 is changed from the start state to a calculation state. Then, a control signal is fed from the state transition circuit 54 to the operation part 10A. At this time, data stored at the respective initial addresses of the memories 25 and 26, which have been set in the address generators 23 and 24, are fed to the registers 35 and 36, respectively. When the control signal is fed to the operation part 10A, the MAC 10a operates a product (the sum of products) of data stored in the registers 35 and 36.

On the other hand, the state transition circuit 54 has therein a register (not shown), in which a value set to be a predetermined value has been stored. If the next address signal fed from the address generator 24 is not equal to the predetermined value, the state transition circuit 54 feeds a SET signal having a value of "0", an addition-subtraction signal and an incremental signal to each of the address generators 23 and 24 to increase or decrease the address. Then, data stored at the increased or decreased address are fed from the memories 25 and 26 to the registers 35 and 36, respectively, and a product of the above described data is operated by the MAC 10a. Then, the sum of this product and the previously derived sum of products is operated by the MAC 10a. Such a multiply and accumulate operation is repeated until the next address signal fed from the address generator 24 to the state transition circuit 54 is equal to the above described preferred embodiment.

When the next address signal fed from the address generator 24 is the above described preferred embodiment or less, the state of the state transition circuit 54 is changed from the calculation state to a completion check state, so that the state transition circuit 54 feeds a timing signal to the comparator 53 and a timing signal to the counter 51. Then, the comparator 53 compares a value stored in the register 52, with a value DATA LENGTH fed from the control register 21 to transmit the compared results to the state transition circuit 54. In addition, when the timing signal is fed to the counter 51, a value derived by adding 1 to the value stored in the register 52, is outputted from the counter 51 to be stored in the register 52.

When the value stored in the register 52 is the value DATA LENGTH or less, the state of the state transition circuit 54 returns to the start state, and the above described processing is repeated. At this time, the state transition circuit 54 feeds a control signal to the MAC 10a to command the MAC 10a to transmit the operated sum of products to the memory 28 via the register 37, the shift circuit 10b and the rounding circuit 10c, and sets an address, at which the sum of products in the memory 28 is to be stored, to store the sum of products in the memory 28. Furthermore, the address initially set in the address generator 24 is generally different from the last address. In addition, when the value stored in the register 52 is greater than the value DATA LENGTH, the state transition circuit 54 is in the reset state to reset the value of the register 52 to be zero, and outputs a BUSY signal having a value of "0".

As an example of the operation of the processor system in this preferred embodiment, a convolution operation will be described below.

The convolutions $Y_j$ (j = 0, • • •, N) of N+1 data $a_0$, • • •, $a_N$ and N+1 data $b_0$, • • •, $b_N$ are expressed by the following formula.

$$Y_j = \sum_{i=0}^{j} a_i \bullet b_{j-i} \qquad\qquad (1)$$

When these convolutions $Y_j$ (j = 0, • • •, N) are operated, the control signal CONTR for operating convolutions, the control signal DATA LENGTH for setting the length of data and so forth are first fed from the decoder 7 to the control register 21 to be set. For example, when the value of the instruction CONTR is "0", a convolution is operated, and when it is "1", a correlation function is operated. In addition, the value of DATA LENGTH is set to be "N".

When a start signal is fed from the decoder 7 in this state, a BUSY signal having a value of "1" is outputted from the state transition circuit 54 of the main controller 22, and a SET signal having a value of "1" and an incremental signal having a value of "0" are fed to the address generating circuits 23 and 24 in order to set the initial addresses of the memories 25 and 26. Thus, the next address signal having a value of "0" is outputted from the address generating circuits 23 and 24, and data $a_0$ and $b_0$ stored at a place having an address of "0" are fed from the corresponding memories 25 and 26 to the registers 35 and 36, respectively.

Before the next address signal is received from the address generating circuit 24, a control signal is fed from the state transition circuit 54 to the MAC 10a of the operation part 10A, and a product $a_0 \bullet b_0$ of data $a_0$ and $b_0$ stored in the registers 35 and 36 are operated by the MAC 10a.

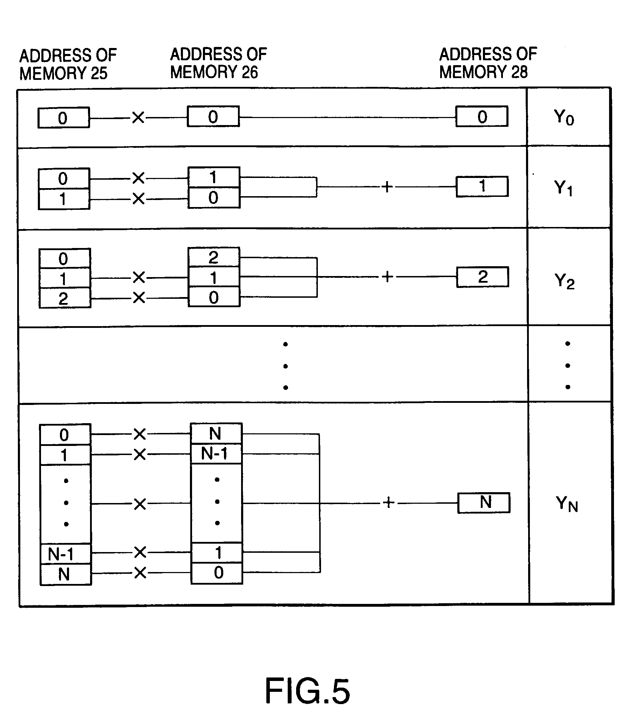

On the other hand, in the state transition circuit 54, a predetermined value of "0" has been stored in a register (not shown), and this predetermined value is compared with the next address signal which is fed from the address generator 24. At this time, since the value of the next address signal is coincident with the above described predetermined value, a control signal is fed from the state transition circuit 54 to the MAC 10a via the register 33, and the sum $Y_0$ (= $a_0 \bullet b_0$) of products operated by the MAC 10a is fed to the memory 28 via the register 37, the shift circuit 10b and the rounding circuit 10c. At this time, the next address signal having a value of "0", which is initially set in the address generating circuit 27 by the state transition circuit 54, is outputted to the memory 28. Thus, the sum $Y_0$ of products is stored at a place of address "0" of the memory 28 (see FIG. 5).

In addition, since the value of the next address signal from the address generator 24 is equal to the above described predetermined value, the state of the state transition circuit 54 is changed from the calculation state to the completion check state. At this time, since the value stored in the register 52 of the main controller 22 shown in FIG. 4 is "0", it is determined by the comparator 53 that the stored value is smaller than the value "N" of the signal DATA LENGTH, and the state of the state transition circuit 54 is changed to the start state. Then, the counter of the main controller 22 carries out an operation for adding 1 to the value stored in the register 52, and the operated results are stored in the register 52.

In addition, since the state of the state transition circuit 54 is changed to the start state, the initial addresses of the address generators 23 and 24 are set to be "0" and "1", respectively, by the state transition circuit 54. Then, the data $a_0$ stored at address "0" of the memory 25 are fed to the register 35, and the data $b_1$ stored at address "1" of the memory 26 are fed to the register 36. Subsequently, the state of the state transition circuit 54 is changed to the calculation state, and a control signal is fed from the state transition circuit 54 to the MAC 10a to calculate a product $a_0 \cdot b_1$. At this time, since the value of the next address signal fed from the address generating circuit 24 is "1", a SET signal, an incremental signal and an addition-subtraction signal are outputted from the state transition circuit 54 so that the value of the next address signal outputted from the address generator 23 is increased by "1" and so that the value of the next address signal outputted from the address generator 24 is decreased by "1". Then, the data $a_1$ stored at address "1" of the memory 25 are stored in the register 35, and the data $b_0$ stored at address "0" of the memory 26 are stored in the register 36.

Subsequently, a control signal is fed from the state transition circuit 54 to the MAC 10a, in which a product $a_1 \cdot b_0$ is operated and the sum (= $a_0 \cdot b_1 + a_1 \cdot b_0$) of the product $a_1 \cdot b_0$ and the previously operated product $a_1 \cdot b_0$ is operated.

In addition, since the value of the next address signal fed from the address generator 24 is equal to the predetermined value "0" in the state transition circuit 54, a control signal is fed from the state transition circuit 54 to the MAC 10a, so that the operated sum $Y_1$ (= $a_0 \cdot b_1 + a_1 \cdot b_0$) of products is fed to the memory 28 via the register 37, the shift circuit 10b and the rounding circuit 10c. At this time, by controlling the address generating circuit 27 by the state transition circuit 54 via the registers 33 and 34, the next address signal having a value of "1" is outputted from the address generating circuit 27, and the above described sum $Y_1$ of products is stored at a place of address "1" of the memory 28 (see FIG. 5).

In addition, since the value of the next address signal from the address generator 24 is equal to the above described predetermined value, the state of the state transition circuit 54 is changed from the calculation state to the completion check state. At this time, since the value stored in the register 52 of the main controller 22 shown in FIG. 4 is "1", it is determined by the comparator 53 that this value is smaller than the value "N" of DATA LENGTH. Thus, the state of the state transition circuit 54 is changed to the start state, and as described above, convolutions $Y_2, \cdots, Y_N$ are sequentially derived to be stored at places of addresses "2", $\cdots$, "N" of each memory 28. Furthermore, when convolutions $Y_j$ (j = 0, $\cdots$, N) are operated, the addresses initially set in the address generators 23 and 24 are "0" and "j", respectively.

Furthermore, before the convolution operation is made by the DMA control unit 30, the data $a_0 \cdots, a_N$ are stored in the memory 25, and the data $b_0, \cdots, b_N$ are stored in the memory 26.

As described above, the convolutions $Y_j$ (j = 0, $\cdots$, N) are derived.

Similarly, correlation functions can be derived. This will be briefly described below. Correlation functions $Z_j$ (j = 0, $\cdots$, N) are expressed by the following formula.

$$Z_j = \sum_{i=j}^{N} a_{i-j} \cdot b_i \qquad\qquad (2)$$

When the correlation functions $Z_j$ (j = 0, $\cdots$, N) are operated, a signal CONTR having a value of "1" and a signal DATA LENGTH having a value of N are fed from the decoder 7 of the RISC part 1 to the control register 21 to be set.

In this state, a start signal is fed from the decoder 7, and the main controller 22 is operated so as to operate correlation functions $Z_j$ (j = 0, $\cdots$, N). This operation is basically the same as a case where convolutions are operated, except for the following point.

(a) A predetermined value stored in a register (not shown) in the state transition circuit 54 is "N".
(b) Addresses initially set in the address generators 23, 24 and 27 when the correlation functions $Z_j$ are derived are "0", "j" and "j", respectively, and the address generators are driven and controlled by the state transition circuit 54 so as to increase the address by "1".

7

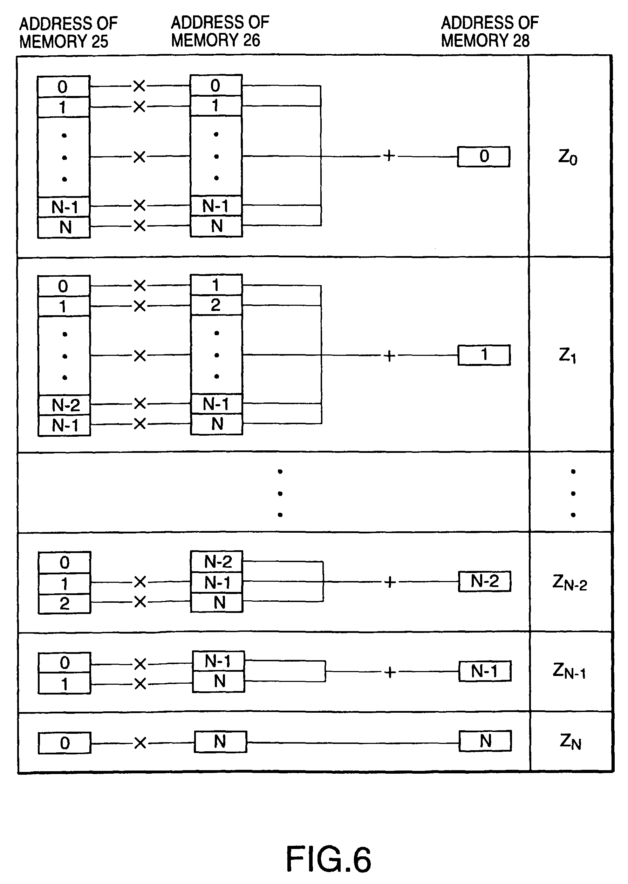

The correlation functions $Z_j$ (j = 0, • • •, N) thus obtained are stored when the address of the memory 28 is "j" (see FIG. 6).

The comparison of a high rate encode processing in G723.1 (speech coding algorithm of ITU (International Telecommunication Union-Telecommunication standard sector)), which includes a convolution operation and an operation of deriving a correlation function, using the processor in this preferred embodiment, with the processing using only a RISC is shown in the following tables.

## Table 1(a)

| Function Name | Hardware Instruction | Number of Calls | Number of Steps per Instruction | | mips Value | |
|---|---|---|---|---|---|---|
| | | | (1) | (2) | (1) | (2) |
| Adaptive | | | | | | |
| Code Book Search | Convolution | 14 | 26661 | 2000 | 12.32 | 0.92 |
| Fixed | Convolution | 64 | 24743 | 2000 | 52.26 | 4.22 |
| Code Book | Autocorrelation | 8 | 24155 | 2000 | 6.38 | 0.53 |
| Search | Correlation | 8 | 25325 | 2000 | 6.69 | 0.53 |
| | | | | Total | 77.64 | 6.20 |

※ (1) Only RISC, (2) The Present Invention

## Table 1(b)

| | Only RISC | The Present Invention |
|---|---|---|
| Encoder | 133.3 mips | 61.9 mips |
| Decoder | 6.1 mips | 6.1 mips |
| Total | 139.4 mips | 68.0 mips |

Herein, the total number of steps is a value per frame, and one frame has 27 msec.

As can be seen from Table 1, if the processor system in this preferred embodiment is used, the operation quantity can be 68.0 mips (million instruction per second), which is far smaller than the operation quantity of 139.4 mips when only RISC is used. In addition, the area of the processor system in this preferred embodiment was increased only by several K gates, in comparison with the case of only RISC.

In the processor system in the above described preferred embodiment, while the coprocessor part is operated, the RISC part 1 can not utilize operational elements (e.g., the MAC 10a, the shift circuit and the rounding circuit in FIG. 2) which are being used by the coprocessor part. However, the RISC part 1 and the coprocessor part can be processed in parallel if the RISC part 1 carries out usual operations with respect to instructions using operational elements (e.g., an adder and comparator (not shown)) which are not being used by the coprocessor part, to stop the operation of the RISC part 1 when instructions using operational elements, which are being used by the coprocessor part, come, and to restart the operation of the RISC part when the processing of the coprocessor part is completed.

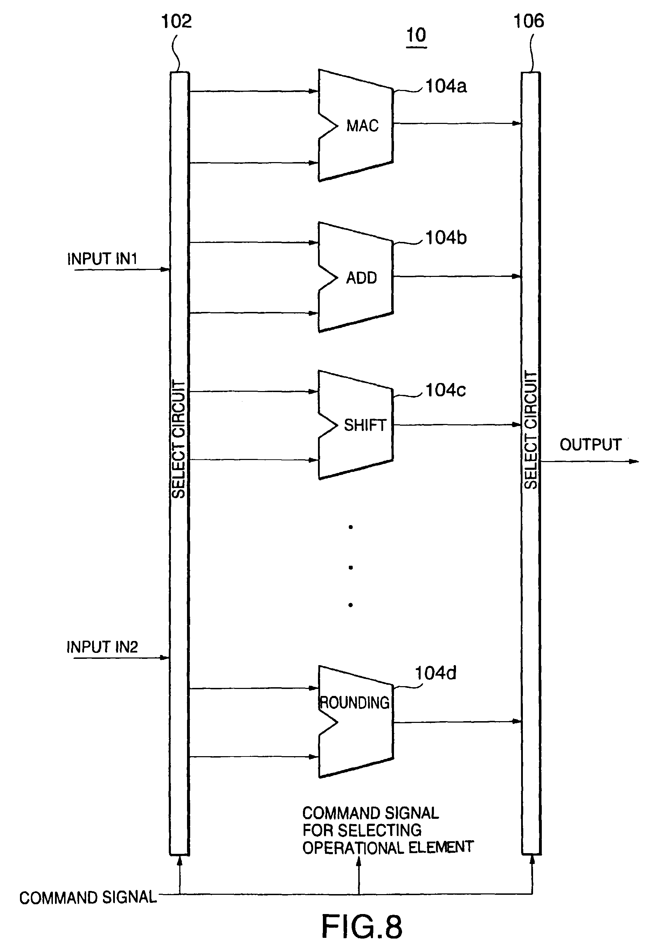

In addition, in the conventional processor system, the ALU 10 of the RISC part 1 feeds two input signals IN1 and IN2, which are inputted as shown in FIG. 8, to an operational element, which is selected on the basis of a command signal via a select circuit 102, e.g., one operational element of a MAC 104a, an adder 104b, a shift circuit 104c and a rounding circuit 104d, to output the operated results via a select circuit 106, to input the output again as one of the input signals IN1 and IN2, if necessary. On the other hand, in this preferred embodiment, the operational elements in the ALU 10A, e.g., the MAC 10a, the shift circuit 10b and the rounding circuit 10c, are connected in series by the coprocessor part 20A as shown in FIG. 2. Therefore, it is possible to carry out a higher processing than the conventional system.

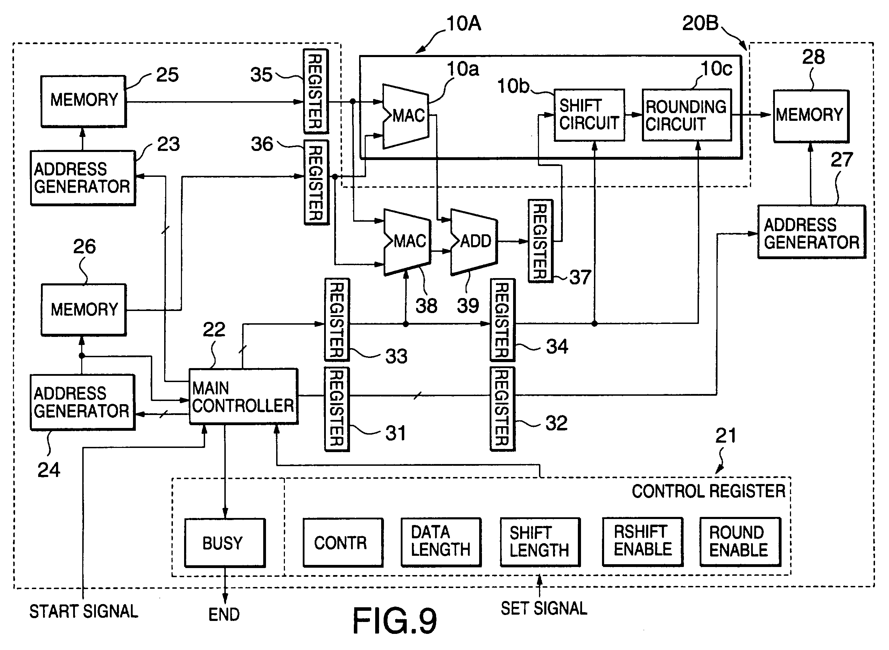

In the above described preferred embodiment, the operational element MAC is provided only on the main processor side. However, if the operational elements of the RISC part are insufficient to process operations which should be processed, operational elements may be provided on the coprocessor side as shown in FIG. 9. In FIG. 9, a coprocessor 20B comprises a MAC 38 and an adder 39 in addition to the elements of the coprocessor 20A shown in FIG. 2. The MAC 38 carries out a sum of products operation on the basis of values stored in the registers 35 and 36, and transmits the operated results to the adder 39. In addition, the adder 39 adds the output of the MAC 10a to the output of the MAC 38, and outputs the added results to the register 37.

Furthermore, in the above described preferred embodiment, the convolution operation processing and the operation processing of the correlation function have been described as examples. However, by changing the function of the main controller and changing the function of the operation part 10 of the RISC part 1, it is possible to carry out a signal processing, such as a filter processing or the FFT (Fast Fourier Transformation).

As described above, according to the present invention, it is possible to provide a processor system which is capable of carrying out a high speed processing and wherein the whole occupied area is smaller.

While the present invention has been disclosed in terms of the preferred embodiment in order to facilitate better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

Reference signs in the claims are intended for better understanding and shall not limit the scope.

### Claims

1.  A processor system comprising:

    a main processor part(1) including a decoder(7) for decoding an incorporated instruction, a register part(8) for storing data therein and for outputting data stored at an address included in the decoded instruction, a first memory(12) for storing data therein, and an operation part(10,10A) for making an operation on the basis of the decoded instruction using data outputted from said register part and for storing the operated result in said register part or said first memory; and
    a coprocessor part(20,20A) including a control register(21) for storing therein a value of a control signal fed from said register part in accordance with the decoded instruction, an address generating part(23,24,27) for generating an address, a memory part(25,26,28) provided so as to correspond to said address generating part, and a main controller(22) for feeding a command signal to said address generating part on the basis of the value of the control signal stored in said control register, to cause said address generating part to generate an address, for causing said memory part to output data stored in the generated data, and for feeding the outputted data to said operation part of said main processor part to cause said operation part to make an operation.

2.  A processor system as set forth in claim 1, wherein said operation part(10A) of said main processor part has a plurality of operational elements(10a,10b,10c), which are connected in series by said main controller of said coprocessor part.

3.  A processor system as set forth in claim 1 or 2, wherein said main processor part is a RISC part, and the operation of said main controller is started on the basis of a start signal fed from said decoder.

4.  A processor system as set forth in any one of claims 1 to 3,

wherein said address generating part has first and second address generators(23,24), and said memory parts has second and third memories(25,26) which correspond to said first and second address generators, respectively.

5. A processor system as set forth in claim 4, wherein said command signal includes a SET signal, an incremental signal and an addition-subtraction signal, and each of said first and second address generators comprises an address register for holding the current address, and an address operational element for operating the next address signal from the address, which is held in said address register, and the value of said incremental signal, in accordance with the values of said SET signal and addition-subtraction signal.

6. A processor system as set forth in claim 5, wherein said address operational element outputs said incremental signal as the next address signal when the value of said SET signal is "1", and the sum of or difference between said current address and the incremental signal in accordance with the value of said addition-subtraction signal when the value of said SET signal is "0".

7. A processor system as set forth in claim 5 or 6, wherein said main controller(22) comprises: a register(52), a counter(51) for adding 1 to a value, which is held in said register, in response to a timing signal and for causing said register to hold the added value; a comparator(53) for comparing a control signal DATA LENGTH, which is held in said control register and which indicates the length of input data, with the value, which is held in said register, in response to said timing signal; and a state transition circuit(54) for changing its transition on the basis of the compared result of said comparator and the value of the next address signal, which is outputted from said second address generator, to output said SET signal, incremental signal and addition-subtraction signal to said first and second address generators, and to feed a control signal to said operation part of said main processor part.

8. A processor system as set forth in claim 7, wherein said state transition circuit has: a reset state; a start state, in which a start signal is received to set initial addresses of said first and second address generators; a calculation state, in which after said initial addresses are set, said control signal is fed to said operation part and the addresses of said first and second address generators are sequentially set to cause said operation part to make a calculation, which is repeated until the next address signal from said second address generator is equal to a predetermine value; and a completion check state, in which after said calculation state is completed, it is checked whether said calculation is completed on the basis of the compared result of said comparator, and said completion check state returns to said start state when said calculation is not completes and to said reset state when said calculation is completed.

9. A processor system as set forth in claim 7 or 8, wherein said operation part(10A) comprises a multiply and accumulate operational element(10a).

10. A processor system as set forth in any one of claims 4 to 9,
wherein said coprocessor part(20) further comprises a third address generator(27) for generating an address in response to a command signal from said main controller, and a fourth memory(28) for storing the operated result, which is outputted from said operation part, at an address outputted from said third address generator.

11. A processor system as set forth in any one of claims 1 to 10,
which further comprises a DMA control unit(30) for exchanging data between the memory of said main processor part and the memory part of said coprocessor part.

12. A processor system formed in a semiconductor substrate, comprising:

a main processor part(1) including a decoder(7) for decoding an incorporated instruction, and an operation part(10,10A) for making an operation using inputted data on the basis of the decoded instruction; and
a coprocessor part(20,20A) including a main controller(22) for feeding data to said operation part of said main processor part on the basis of a control signal, which is fed in accordance with the decoded instruction, and for causing said operation part to make an operation.

13. A processor system as set forth in claim 12, wherein said operation part(10A) of said main processor part has a plurality of operational elements(10A,10B,10C), which are connected in series by said main controller of said coprocessor part.

FIG.1

FIG.2

Block diagram labels: 20A, 28 MEMORY, 27 ADDRESS GENERATOR, 10A, 10a MAC, 10b SHIFT CIRCUIT, 10c ROUNDING CIRCUIT, 37 REGISTER, 34 REGISTER, 32 REGISTER, 33 REGISTER, 31 REGISTER, 35 REGISTER, 36 REGISTER, 25 MEMORY, 23 ADDRESS GENERATOR, 26 MEMORY, 24 ADDRESS GENERATOR, 22 MAIN CONTROLLER, 21 CONTROL REGISTER (CONTR, DATA LENGTH, SHIFT LENGTH, RSHIFT ENABLE, ROUND ENABLE), BUSY, SET SIGNAL, START SIGNAL, END

INCREMENT SET     ADDITION-SUBTRACTION
SIGNAL    SIGNAL   SIGNAL

ADDRESS
REGISTER          ~41

42~  SELECTOR

43~  ADDER
     -SUBTRACTER

NEXT ADDRESS SIGNAL

FIG.3

DATA LENGTH SIGNAL
FROM CONTROL
REGISTER

22

NEXT ADDRESS SIGNAL
FROM ADDRESS
GENERATOR 24

52

1

REGISTER

51 —| COUNTER

53 — COMPARATOR

54

BUSY ◄——| STATE TRANSITION CIRCUIT |——— START SIGNAL

SET
SIGNAL

INCREMENTAL
SIGNAL

ADDITION
-SUBTRACTION
SIGNAL

CONTROL SIGNAL
OF OPERATION
PART

TO ADDRESS GENERATOR

TO OPERATION
PART OF RISC

# FIG.4

FIG.5

FIG.6

FIG.7

EP 1 055 999 A2

102                                    10                                   106

104a

MAC

INPUT IN1

104b

ADD

SELECT CIRCUIT

104c

SHIFT

SELECT CIRCUIT        OUTPUT

.
.
.

INPUT IN2

104d

ROUNDING

COMMAND SIGNAL
FOR SELECTING
OPERATIONAL ELEMENT

COMMAND SIGNAL

FIG.8

FIG.9

EP 1 055 999 A2